# EUROPÄISCHE PATENTSCHRIFT

(11) **EP 3 568 320 B1**
(45) Veröffentlichungstag und Bekanntmachung des Hinweises auf die Patenterteilung: **13.05.2020**
(21) Anmeldenummer: 18711500.1
(22) Anmeldetag: 05.03.2018
(51) Int. Cl.: B60Q 1/14

(54) **BEREITSTELLEN EINER LICHTFUNKTION ZUM UNTERSTÜTZEN EINES FAHRERS BEIM FÜHREN EINES KRAFTFAHRZEUGES**
PROVIDING A LIGHTING FUNCTION FOR ASSISTING A DRIVER WHEN DRIVING A MOTOR VEHICLE
FOURNITURE D'UNE FONCTION LUMINEUSE POUR ASSISTER UN CONDUCTEUR PENDANT LA CONDUITE D'UN VÉHICULE AUTOMOBILE

(30) Priorität: 07.03.2017 DE 102017203717
(43) Veröffentlichungstag der Anmeldung: 20.11.2019
(73) Patentinhaber: Audi AG, 85045 Ingolstadt (DE)
(72) Erfinder: GUT, Carsten, 88662 Überlingen (DE)
(74) Vertreter: Thielmann, Frank
(86) Internationale Anmeldenummer: PCT/EP2018/055312
(87) Internationale Veröffentlichungsnummer: WO 2018/162392

(56) Entgegenhaltungen:
- EP-A1- 2 896 937
- EP-A1- 3 135 537
- EP-A2- 1 916 153
- DE-A1-102013 016 250
- FR-A1- 2 967 625

## Beschreibung

Die Erfindung betrifft ein Verfahren zum Bereitstellen einer Lichtfunktion zum Unterstützen eines Fahrers beim Führens eine Kraftfahrzeuges, bei dem die Lichtfunktion aktiviert wird, eine Lichtverteilung gemäß der Lichtfunktion ermittelt wird, eine Perspektive eines Fahrers des Kraftfahrzeuges ermittelt wird, und eine Projektionseinrichtung des Kraftfahrzeuges derart gesteuert wird, dass die Projektionseinrichtung Licht gemäß der Lichtverteilung abgibt. Die Erfindung betrifft ferner eine Vorrichtung zum Bereitstellen einer Lichtfunktion zum Unterstützen eines Fahrers beim Führen eines Kraftfahrzeuges, wobei die Vorrichtung aufweist: Mittel zum Aktivieren der Lichtfunktion aufgrund eines Empfangs eines der Lichtfunktion zugeordneten Aktivierungssignals, Mittel zum Ermitteln einer Lichtverteilung gemäß der Lichtfunktion, Mittel zum Ermitteln einer Perspektive eines Fahrers des Kraftfahrzeuges, und eine Steuereinheit zum Bereitstellen eines Steuersignals zum Steuern der Projektionseinrichtung des Kraftfahrzeuges, sodass die Projektionseinrichtung Licht gemäß der Lichtverteilung abgibt. Darüber hinaus betrifft die Erfindung auch ein Kraftfahrzeug.

Verfahren sowie Vorrichtungen der gattungsgemäßen Art sowie auch Kraftfahrzeugen mit derartigen Vorrichtungen sind im Stand der Technik umfänglich bekannt. Sie dienen dazu, eine Lichtfunktion bereitzustellen, die zum Beispiel der Ausleuchtung eines Verkehrswegs beziehungsweise eines Fahrwegs, auf dem das Kraftfahrzeug von dem Fahrer geführt wird, oder auch dem Bereitstellen von visuell für den Fahrer erfassbaren Signalen dienen. In diesem Zusammenhang offenbart beispielsweise die DE 10 2016 00 838 A1 ein Verfahren und eine Steuereinheit zur Erleichterung der Positionierung eines Fahrzeuges. Diese Lehre ist insbesondere darauf gerichtet, eine seitliche Positionierung des Kraftfahrzeuges zu verbessern, um dadurch eine verbesserte Positionierung gegenüber ein in einer Fahrbahn angeordnetes Energieübertragungssegment einer Straße in Fahrtrichtung des Kraftfahrzeuges zu verbessern, sodass eine Energieübertragung verbessert ist. Das Energieübertragungssegment basiert darauf, mittels eines magnetischen Wechselfeldes Energie bereitzustellen, die dem Kraftfahrzeug zugeführt werden kann, indem mittels eines geeigneten Energiekopplers dem Wechselfeld Energie entnommen wird. Damit eine brauchbare Energiekopplung erreicht werden kann, ist es erforderlich das Kraftfahrzeug gegenüber dem Energieübertragungssegment möglichst genau auszurichten. Zu diesem Zweck werden seitliche Begrenzungen des Energieübertragungssegments vor dem Kraftfahrzeug ermittelt. Zusätzlich wird eine Abweichung der ermittelten seitlichen Position des Kraftfahrzeuges von den festgestellten seitlichen Begrenzungen des Energieübertragungssegments ermittelt. Sodann wird ein Vorgang zur Erleichterung der seitlichen Positionierung des Kraftfahrzeuges innerhalb der seitlichen Begrenzungen durchgeführt, sodass der Fahrer darin unterstützt wird, das Kraftfahrzeug innerhalb der seitlichen Begrenzungen des Energieübertragungssegments zu halten. Zu diesem Zweck erfolgt eine entsprechende Anzeige eines Zeichens oder eines Symbols in einem Head-Up-Display (HUD) auch Frontscheibenanzeige oder Head-up-Anzeigeeinrichtung genannt. Darüber hinaus kann ein entsprechendes Zeichen auf die Fahrbahn vor dem Fahrzeug projiziert werden, um den Fahrer in gewünschter Weise führen zu können. EP2896937 A1 offenbart ein Fahrbahnprojektionssystem. Ein Fahrbahnprojektionssystem in einem Fahrzeug ist konfiguriert, um ein bestimmtes Fahrszenario zu identifizieren, auf das ein Fahrer des Fahrzeugs trifft. Basierend auf dem Szenario projiziert das System ein Bild auf die Straße.

Auch wenn sich dieser Stand der Technik bewährt hat, so zeigen sich dennoch Nachteile. Mittels der heutigen Scheinwerfer und HUD's werden entsprechende Lichtverteilungen beziehungsweise Lichtfunktionen unabhängig von einer Topographie dargestellt. Dies kann dazu führen, dass die visuelle Darstellung für den Fahrer nicht immer hinreichend ersichtlich ist. Fehlleitungen können die Folge sein.

Der Erfindung liegt somit die Aufgabe zugrunde, das Bereitstellen der Lichtfunktion zum Unterstützen des Fahrers beim Führen des Kraftfahrzeuges zu verbessern.

Als Lösung werden mit der Erfindung ein Verfahren, eine Vorrichtung sowie ein Kraftfahrzeug gemäß den unabhängigen Ansprüchen vorgeschlagen.

Vorteilhafte Weiterbildungen ergeben sich anhand von Merkmalen der abhängigen Ansprüche. Darüber hinaus sollten Ausführungsformen und Aspekte, die nicht durch die Ansprüche abgedeckt sind, nicht als Ausführungsformen der Erfindung, sondern als Beispiele zum Verständnis der Erfindung ausgelegt werden.

Bezüglich eines gattungsgemäßen Verfahrens wird insbesondere vorgeschlagen, Topographiedaten von einer Umgebung in einem Sichtfeld des Fahrers und/oder Objektdaten von einem Objekt in der Umgebung im Sichtfeld des Fahrers ermittelt werden und die Lichtverteilung abhängig von den Topographie- und/oder Objektdaten und der Perspektive ermittelt wird.

Bezüglich einer gattungsgemäßen Vorrichtung wird insbesondere vorgeschlagen, dass die Vorrichtung Mittel zum Ermitteln von Topographiedaten von einer Umgebung in einem Sichtfeld des Fahrers und/oder von Objektdaten von einem Objekt in der Umgebung im Sichtfelds des Fahrers aufweist und wobei die Mittel zum Ermitteln der Lichtverteilung ausgebildet sind, die Lichtverteilung abhängig von den Topographie- und/oder Objektdaten und der Perspektive zu ermitteln.

Kraftfahrzeugseitig wird insbesondere vorgeschlagen, dass das Kraftfahrzeug eine Vorrichtung der Erfindung umfasst.

Die Erfindung basiert auf der Idee, dass durch ein Berücksichtigen der Topografie- und/oder Objektdaten in Verbindung mit der Perspektive eine verbesserte Projektion durch die Projektionseinrichtung erreicht werden kann. Dabei kann die Projektion beziehungsweise Darstellung unter Berücksichtigung Topografie- und/oder Objektdaten in Verbindung mit der Perspektive vorzugsweise derart entzerrt werden, dass eine im Wesentlichen für den Fahrer visuell ungestörte Projektion beziehungsweise Darstellung erreicht werden kann. Der Fahrer kann somit die Projektion beziehungsweise Darstellung im Wesentlichen unabhängig von der Projektionsfläche und deren Eigenschaften erfassen. Auch wenn sich die Erfindung natürlich insbesondere an den Fahrer des Kraftfahrzeugs als Fahrzeugführer richtet, kann die Erfindung gleichermaßen auch für einen Mitfahrer als Fahrer angewendet werden.

Das Aktivieren der Lichtfunktion kann zum Beispiel aufgrund eines Steuerbefehls des Fahrers erfolgen, indem dieser manuell eine Taste betätigt, eine entsprechende Spracheingabe, eine entsprechende Gesteneingabe und/oder dergleichen vornimmt. Darüber hinaus kann das Aktivieren jedoch auch durch eine Kraftfahrzeugsteuerung veranlasst sein, die beispielsweise aufgrund eines Zustands des Kraftfahrzeuges und/oder einer Umgebung des Kraftfahrzeuges eine entsprechende Ausgabe an den Fahrer vornehmen möchte. So kann beispielsweise eine Abbiegeempfehlung oder dergleichen ausgegeben werden. Die Abbiegeempfehlung kann zum Beispiel von einem Navigationssystem des Kraftfahrzeuges aktiviert worden sein.

Es kann eine Mehrzahl von entsprechenden Lichtfunktionen vordefiniert sein, sodass es lediglich eines einfachen, vorzugsweise digitalen, Steuersignals bedarf, um die jeweilige Lichtfunktion zu aktivieren. So kann beispielsweise wenigstens einer Lichtfunktion eine Lichtverteilung zugeordnet sein, die zum Beispiel in einer Datei gespeichert ist. Der jeweiligen Lichtfunktion kann eine eindeutige entsprechende Lichtverteilung zugeordnet sein, die dann automatisch durch die Projektionseinrichtung visuell bereitgestellt wird. Die Lichtverteilung kann neben Zeichen, insbesondere Symbolen, auch eine visuelle Hervorhebung von bestimmten Bereichen des Sichtfelds und/oder dergleichen umfassen.

Die Erfindung nutzt das Ermitteln einer Perspektive des Fahrers des Kraftfahrzeuges. Zu diesem Zweck können fahrzeugseitig, insbesondere im Bereich einer Position des Fahrers, ein oder mehrere entsprechende Sensoren angeordnet sein, mittels denen eine Kopfposition, insbesondere eine Augenposition beziehungsweise eine Ausrichtung eines Auges, erfasst werden kann. Es kann auch eine Höhenposition sowie eine Orientierung eines Sichtfeldes des Fahrers in Bezug auf eine Fahrzeuglängsachse des Kraftfahrzeuges ermittelt werden.

Erfindungsgemäß werden ferner Topographiedaten von einer Umgebung in einem Sichtfeld des Fahrers ermittelt. Diese können dazu dienen, die Lichtverteilung der Lichtfunktion entsprechend anzupassen, sodass unter Berücksichtigung der Topographiedaten eine im Wesentlichen unverzerrrte Darstellung der Lichtverteilung aus Sicht des Fahrers realisiert werden kann. Zu diesem Zweck können alternativ oder ergänzend auch Objektdaten eines Objekts in der Umgebung im Sichtfeld des Fahrers ermittelt werden. Dadurch ist es möglich, die Projektion und beziehungsweise die Darstellung für den Fahrer im Wesentlichen unverzerrt bereitzustellen. Darüber hinaus erlaubt es die Erfindung, sichtbehindernde Topographien beziehungsweise Objekte so in die Lichtverteilung einzuarbeiten, dass diese die Projektion beziehungsweise Darstellung aus Sicht des Fahrers im Wesentlichen nicht beeinträchtigen. Dadurch kann eine zuverlässige Projektion beziehungsweise Darstellung auch bei ungünstigen Randbedingungen, insbesondere Topographien beziehungsweise Objekten, erreicht werden. Ergänzend hierzu kann dann die ermittelte Perspektive des Fahrers berücksichtigt werden, um eine Entzerrung der Darstellung weiter zu verbessern. Es ist also mit der Erfindung möglich, eine visuell erfassbare Projektion beziehungsweise Darstellung für den Fahrer zu realisieren, die im Wesentlichen unverzerrt und unter Berücksichtigung der ermittelten Topographie und/oder Objekte erfolgt.

Die Projektionseinrichtung kann zumindest durch einen Scheinwerfer des Kraftfahrzeuges bereitgestellt sein. Der Scheinwerfer ist zur Bereitstellung einer der Lichtfunktion entsprechenden Lichtverteilung ausgebildet und mit einem entsprechenden Signal der Steuereinheit gesteuert. Daraufhin wird die Lichtabgabe gemäß der Lichtverteilung derart eingestellt, dass das vom Scheinwerfer abgegebene Licht auf eine Projektionsfläche, insbesondere den Verkehrsweg beziehungsweise die Fahrbahn, projiziert wird, sodass sie visuell vom Fahrer erfasst werden kann. Zu diesem Zweck wird das Licht vorzugsweise in einem Bereich auf der Fahrbahn in Fahrtrichtung vor dem Kraftfahrzeug abgegeben, der üblicherweise vom Fahrer im bestimmungsgemäßen Fahrbetrieb des Kraftfahrzeuges gut eingesehen werden kann.

Der Scheinwerfer ist vorzugsweise ein Pixelscheinwerfer. Ein Pixelscheinwerfer ist ein Scheinwerfer der eine Mehrzahl von Pixeln aufweist, die vorzugsweise individuell Licht abgeben können. Mittels der Scheinwerfersteuerung kann die Lichtabgabe der einzelnen Pixel gesteuert werden. Die Pixel des Pixelscheinwerfers sind vorzugsweise nach Art einer Matrix angeordnet. Ein Pixel ist in der Regel durch ein Leuchtelement gebildet, welches von der Scheinwerfersteuerung individuell hinsichtlich seiner Lichtabgabe gesteuert werden kann. Die Steuerung der Leuchtelemente kann individuell im Wesentlichen unabhängig voneinander erfolgen, sodass nahezu beliebige Lichtverteilungen mittels des Pixelscheinwerfers bereitgestellt werden können. Somit kann eine hochflexible Lichtverteilung bezüglich der Lichtabgabe des Pixelscheinwerfers erreicht werden. Das Leuchtelement kann beispielsweise eine Leuchtdiode, eine Laserdiode, aber dem Grunde nach auch eine Glimmlampe, eine Gasentladungslampe, Kombinationen hiervon oder dergleichen sein. Darüber hinaus können die Pixel des Pixelscheinwerfers auch durch einen Leuchtstoff bereitgestellt sein, der mittels eines Laserlichtstrahls einer Laserlichtquelle punkt- und/oder zeilenweise zur Lichtabgabe aktiviert werden kann. Der Konversionsstoff stellt in diesem Fall die Pixel des Pixelscheinwerfers bereit. Bei einem derartigen Scheinwerfer kann es darüber hinaus vorgesehen sein, dass die Pixel nahezu grenzenlos ineinander übergehen, beispielsweise aufgrund einer entsprechenden Ansteuerung durch den Laser. Ein solcher Scheinwerfer wird auch als Laserscanner bezeichnet. Darüber hinaus kann die Projektionseinrichtung aber auch eine Head-Up-Anzeigeeinrichtung umfassen. Eine Head-Up-Anzeigeeinrichtung, auch Head-Up-Display (HUD) genannt (wörtlich übersetzt: Kopf-Oben-Anzeige), ist eine Anzeigeeinrichtung, bei der ein Nutzer, hier der Fahrer des Kraftfahrzeuges, seine Kopfhaltung beziehungsweise seine Blickrichtung während des bestimmungsgemäßen Betrieb des Kraftfahrzeuges, insbesondere beim Führen des Kraftfahrzeugs, beibehalten kann, weil die Informationen, die gemäß der Lichtverteilung in sein Sichtfeld projiziert werden, so in das Sichtfeld des Fahrers projiziert werden, dass er seine zum Führen des Kraftfahrzeuges gewählte Perspektive im Wesentlichen unverändert beibehalten kann. Üblicherweise nutzt das HUD eine Frontscheibe beziehungsweise eine Windschutzscheibe des Kraftfahrzeuges zumindest im Bereich einer Fahrerposition für eine entsprechende Projektion beziehungsweise Darstellung. Ein HUD wird deshalb gelegentlich auch Frontscheibenprojektor genannt. Ein HUD als Projektionseinrichtung umfasst neben einer Projektionseinheit, die eine entsprechende Lichtverteilung bereitstellt, eine entsprechend steuerbare Lichtquelle sowie eine Optikeinheit. Mittels der Optikeinheit wird das von der Lichtquelle abgegebene Licht gemäß der Lichtverteilung entsprechend auf eine Projektionsfläche, vorzugsweise die Frontscheibe des Kraftfahrzeuges, geführt. Bei HUD's handelt es sich also um Anzeigeeinrichtungen mit einer bildgebenden Projektionseinheit zum Projizieren eines virtuellen Bildes, also einer grafischen Information, in einem Strahlengang auf eine Reflexionsfläche in einem Innenraum des Kraftfahrzeuges, die in der Regel durch die Windschutzscheibe beziehungsweise die Frontscheibe des Kraftfahrzeuges bereitgestellt ist.

Die Erfindung nutzt die Erkenntnis, dass eine Berechnung für die Projektionseinrichtung vorzugsweise unabhängig von der tatsächlichen Ausgestaltung der Projektionseinrichtung vorgenommen werden kann. Das heißt, die Berechnung der der Lichtfunktion zugeordneten Lichtverteilung kann sowohl für eine Projektion mittels Scheinwerfer als auch für eine Projektion auf dem HUD verwendet werden. Die Berechnung hierfür kann dem Grunde nach im Wesentlichen sogar identisch sein. Dabei braucht lediglich eine unterschiedliche Position vom HUD in Bezug auf einen etwaigen Scheinwerfer berücksichtigt zu werden. Dies kann jedoch durch eine einfach Anpassung mittels eines oder mehrerer Parameter und/oder dergleichen erfolgen. Es braucht lediglich berücksichtigt zu werden, dass eine Architektur des HUD und/oder des Scheinwerfers entsprechend geeignet zur Verfügung stehen. Die Architektur ist natürlich so zu wählen, dass eine Lichtverteilung gemäß der Lichtfunktion mit einer vorgegeben Auflösung auch dargestellt werden kann. Beispielsweise kann eine Auflösung von bis zu etwa 1 Million Pixel oder auch mehr vorgesehen sein. Die Projektionseinrichtung im Sinne der Erfindung kann somit ein HUD und/oder ein Scheinwerfer sein. Sowohl das HUD als auch der Scheinwerfer sind entsprechend ausgebildet, um die in der Lichtfunktion entsprechende Lichtverteilung in geeigneter Weise für den Fahrer visuell erfassbar darzustellen.

Vorzugsweise ist vorgesehen, das die Lichtverteilung abhängig von Sichtverhältnissen ermittelt wird. Die Sichtverhältnisse sind visuelle Eigenschaften der Umgebung, insbesondere einer das Kraftfahrzeug umgebenden Atmosphäre, die die Sichtbarkeit der Projektion für den Fahrer beeinträchtigen können, so beispielsweise Nebel, Regen, Schnee aber auch eine Umgebungshelligkeit, Licht von externen Lichtquellen, insbesondere entgegenkommenden und/oder vorausfahrenden Kraftfahrzeugen, und/oder dergleichen. Dies kann zur Ermittlung der Lichtverteilung ergänzend in Betracht gezogen werden.

Gemäß einer Weiterbildung wird vorgeschlagen, dass die Projektionseinrichtung derart gesteuert wird, dass die Lichtverteilung unabhängig von einer Orientierung des Kraftfahrzeuges in Bezug auf eine Oberfläche eines Verkehrswegs, auf dem das Kraftfahrzeug geführt wird, bereitgestellt wird. Dadurch können beispielsweise unterschiedliche Eigenschaften des Verkehrswegs, insbesondere in Bezug auf eine Oberfläche des Verkehrsweges, berücksichtigt werden. So ist es beispielsweise möglich, Reflexionseigenschaften zu berücksichtigen, beispielsweise wenn der Verkehrsweg aufgrund von Nässe eine erhöhte Reflexion aufweist, oder aufgrund einer Art eines Fahrbahnbelags unterschiedliche Eigenschaften bezüglich der Darstellung zu berücksichtigen sind, so beispielsweise Asphalt, Kopfsteinpflaster und/oder dergleichen.

Vorzugsweise ist vorgesehen, dass die Perspektive vom Fahrer und/oder abhängig von Fahrzeugdaten des Kraftfahrzeuges automatisiert angepasst wird. So ist es möglich, dass der Fahrer mittels einer beispielsweise manuellen Eingabe eine entsprechende Anpassung der Perspektive vornimmt, sodass eine für ihn visuell besser erfassbare Projektion mittels der Projektionseinrichtung erfolgen kann. Dies kann jedoch auch automatisiert und abhängig von Fahrzeugdaten des Kraftfahrzeuges erfolgen, beispielsweise wenn der Fahrer aufgrund einer aktuellen Fahrsituation seine Perspektive verändert und dies mittels der hierfür vorgesehen Sensoren erfasst wird. Es kann aber auch vorgesehen sein, dass eine entsprechende Anpassung aufgrund von bei der Kraftfahrzeugsteuerung vorliegenden Fahrzeugdaten des Kraftfahrzeuges automatisiert vorgenommen wird, beispielsweise in Abhängigkeit einer Fahrgeschwindigkeit, eines Wechselns eines Fahrbahnbelags, anderer mittels geeigneter Sensoren erfasster Eigenschaften und/oder dergleichen.

Gemäß einer Weiterbildung wird vorgeschlagen, dass die Projektionseinrichtung wenigstens zwei Pixelscheinwerfer umfasst und die Pixelscheinwerfer derart gesteuert werden, dass die Lichtverteilung durch eine Überlagerung der Lichtabgabe durch die Scheinwerfer bereitgestellt wird. Dadurch ist es möglich, eine vergrößerte Projektionsfläche zu nutzen, weil mit zwei Pixelscheinwerfern eine entsprechend verbesserte, insbesondere vergrößerte Darstellung erreicht werden kann. Darüber hinaus kann natürlich auch vorgesehen sein, dass mittels der Scheinwerfer eine größere Helligkeit, ein größerer Kontrast und/oder dergleichen für die Projektion bereitgestellt werden kann. Dies ist insbesondere dann von Vorteil, wenn eine Umgebungshelligkeit sehr hoch ist und eine Projektion mit lediglich einem einzigen Pixelscheinwerfer aufgrund eines geringen Kontrast für den Fahrer visuell nur schwer zu erfassen wäre. Auch aus anderen Gründen kann die Nutzung von zwei Scheinwerfern zur Darstellung der Lichtverteilung von Vorteil sein, beispielsweise wenn Wettereigenschaften wie Regen, Schnee oder dergleichen eine entsprechende Projektion auf den Verkehrsweg beziehungsweise die Fahrbahn stören und/oder dergleichen.

Vorzugsweise umfasst die Projektionseinrichtung wenigstens eine Head-Up-Anzeigeeinrichtung, wobei die Head-Up-Anzeigeeinrichtung derart gesteuert wird, dass die Lichtverteilung durch die Head-Up-Anzeigeeinrichtung bereitgestellt wird. Die Head-Up-Anzeigeeinrichtung ermöglicht es, auf einer entsprechenden Projektionsfläche, insbesondere einer Reflexionsfläche, vorzugsweise eine Windschutzscheibe des Kraftfahrzeuges, eine entsprechende Projektion für den Fahrer des Kraftfahrzeuges bereitzustellen. Da die Sichtbarkeit für den Fahrer auch von weiteren Eigenschaften des Sichtfelds abhängig ist, erweist sich die entsprechende Steuerung gemäß der Erfindung als besonders vorteilhaft. So können nicht nur automatisch ein Kontrast und/oder eine Helligkeit angepasst werden, sondern es können darüber hinaus auch bestimmte Bereiche der Darstellung beziehungsweise der Projektion hinsichtlich der Darstellung so angepasst werden, dass eine verbesserte Sichtbarkeit auch bei ungünstigen Hintergrund realisiert werden kann, beispielsweise wenn im Sichtfeld des Fahrers ein visuell ungünstiges Objekt wie ein Gebäude oder dergleichen vorhanden ist, welches die visuelle Sichtbarkeit der Projektion für den Fahrer stören würde. Dadurch kann eine verbesserte visuelle Erkennung für den Fahrer erreicht werden.

Die erfindungsgemäße Projektionseinrichtung kann somit beispielsweise wenigstens einen Scheinwerfer und wenigstens ein HUD umfassen.

Darüber hinaus wird vorgeschlagen, dass eine Lichtverteilung, die über einen Darstellungsbereich der Head-Up-Anzeigeeinrichtung hinausragt, zumindest teilweise durch wenigstens einen der Pixelscheinwerfer dargestellt wird. Diese Ausgestaltung eignet sich insbesondere zur Darstellung von großflächigen Projektionen, zu deren Darstellung die Head-Up-Anzeigeeinrichtung alleine nicht ausreichen würde. Mit der Erfindung ist es aufgrund einer gemeinsamen Berechnung der Darstellung für den Scheinwerfer und für die Head-Up-Anzeigeeinrichtung auf einfache Weise möglich, eine gemeinsame Projektion beziehungsweise Darstellung zu erreichen und unter Nutzung beider Darstellungsmöglichkeiten eine vergrößerte Projektionsfläche bereitzustellen. Dadurch ist es möglich, eine Lichtverteilung mit einer größeren Auflösung zur Verfügung zu stellen, sodass dem Fahrer eine verbesserte grafische Darstellung zur Verfügung gestellt werden kann. Dabei kann vorgesehen sein, dass sich die Darstellungen durch den Scheinwerfer die Head-Up-Anzeigeeinrichtung zumindest teilweise überschneiden. Es kann aber auch vorgesehen sein, dass diese aneinander angrenzen und eine Überscheidung im Wesentlichen nicht vorgesehen ist. Gleichwohl kann durch die Erfindung erreicht werden, dass eine nahezu übergangslose gemeinsame Darstellung für eine visuelle Erfassung durch den Fahrer erreicht werden kann.

Weiterhin wird vorgeschlagen, dass zwischen einer Darstellung einer Lichtverteilung durch wenigstens einen der Pixelscheinwerfer und einer Darstellung der Lichtverteilung durch die Head-Up-Anzeigeeinrichtung umgeschaltet wird. Diese Ausgestaltung eignet sich insbesondere für den Fall, wenn eine Darstellung mittels des Scheinwerfers aufgrund von einem aktuellen Beleuchtungserfordernis nicht möglich ist. In diesem Fall wird vorzugsweise die Head-Up-Anzeigeeinrichtung für die Darstellung genutzt. Andererseits kann auch umgekehrt vorgesehen sein, dass die Head-Up-Anzeigeeinrichtung für eine fahrerindividuelle Projektion genutzt wird, beispielsweise um Motordaten anzuzeigen oder dergleichen, aber ergänzend eine weitere Darstellung gewünscht ist, beziehungsweise automatisiert erfolgen soll, beispielsweise um eine Warnung oder einen Abbiegehinweis oder dergleichen anzeigen zu können. Für den Fahrer kann hierdurch auch eine Wahlmöglichkeit zur Darstellung bereitgestellt werden, sodass er bedarfsweise die gewünschte Projektionsfläche auswählen kann. Beispielsweise kann vorgesehen sein, dass bei einer hohen Umgebungshelligkeit eine Darstellung auf der Head-Up-Anzeigeeinrichtung vorgesehen ist, wohingegen bei Dunkelheit eine Darstellung mittels des Scheinwerfers auf dem Verkehrsweg beziehungsweise der Fahrbahn erfolgt.

Die für das erfindungsgemäße Verfahren angegebenen Wirkungen und Vorteile gelten gleichermaßen für die erfindungsgemäße Vorrichtung sowie das mit der erfindungsgemäßen Vorrichtung ausgerüstete Kraftfahrzeug und umgekehrt. Entsprechend können für Verfahrensmerkmale auch Vorrichtungsmerkmale und umgekehrt formuliert sein.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

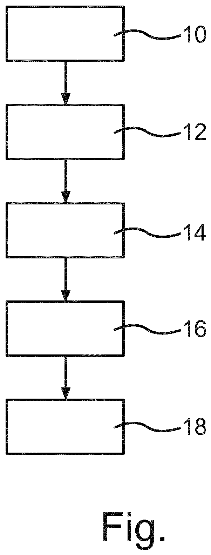

Im Folgenden sind Ausführungsbeispiele der Erfindung beschrieben. Es zeigt die einzige Figur ein schematisches Ablaufdiagramm für eine erfindungsgemäße Verfahrensführung. Die Verfahrensführung der Erfindung erlaubt eine Verzerrungskompensation für eine Projektionseinrichtung, die durch ein HUD und/oder einen Scheinwerfer eines Kraftfahrzeuges gebildet sein kann.

In einem ersten Block 10 erfolgt die Aktivierung einer Lichtfunktion. Es wird ermittelt, ob eine Lichtfunktion aktiviert werden soll. Die Lichtfunktion kann beispielsweise manuell durch Betätigung eines Betätigungselements wie eine Druckknopf, einem Schalthebel und/oder dergleichen, mittels einer Spracheingabe oder auch mittels einer Gesteneingabe vom Fahrer des Kraftfahrzeuges angefordert werden. Darüber hinaus besteht die Möglichkeit, eine automatische Aktivierung vorzusehen, die beispielsweise aufgrund von Fahrzeugdaten erfolgt. Zu diesem Zweck kann eine übergeordnete Kraftfahrzeugsteuerung, bei der entsprechende Fahrzeugdaten vorliegen, ein entsprechendes Aktivierungssignal an eine Vorrichtung gemäß der Erfindung abgeben.

Die erfindungsgemäße Verfahrensführung kann mit einer Vorrichtung durchgeführt werden, die als Mittel beispielsweise eine elektronische HardwareSchaltung und/oder eine Rechnereinheit umfassen kann. Die Rechnereinheit kann mittels eines geeigneten Rechnerprogramms in geeigneter Weise gesteuert werden, um die gewünschte Funktionalität bereitstellen zu können. Natürlich kann die Hardwareschaltung und/oder die Rechnereinheit zumindest teilweise als ein integriertes Halbleiterbauelement ausgebildet sein. Darüber hinaus besteht die Möglichkeit, dass die Vorrichtung auch zumindest teilweise in die übergeordnete Kraftfahrzeugsteuerung integriert ausgebildet ist.

In einem Block 12 wird gemäß einem nachfolgenden Schritt für die jeweilige Lichtfunktion die entsprechende Perspektive ermittelt. Zu diesem Zweck wird eine Perspektive des Fahrers ermittelt. Für eine gute Kompensation einer etwaigen Verzerrung bei der Darstellung der jeweiligen Lichtfunktion beziehungsweise der Lichtfunktion zugeordneten Lichtverteilung, sollte für die jeweilige Lichtfunkton die Perspektive des Betrachtenden, hier des Fahrers des Kraftfahrzeuges, festgelegt werden. Es kann vorgesehen sein, dass die Perspektive bereits einer jeweiligen Lichtfunktion fest zugeordnet ist. Alternativ kann jedoch auch vorgesehen sein, dass die Perspektive vom Fahrer manuell oder auch von der übergeordneten Kraftfahrzeugsteuerung automatisiert angepasst wird.

In einem folgenden Schritt, der im Block 14 dargestellt ist, erfolgt die Berechnung der der Lichtfunktion zugeordneten Lichtverteilung. Die Berechnung nutzt Topographie- und/oder Objektdaten, die mittels geeigneter Sensoren die Topographie und/oder Objekte im Sichtfeld des Fahrers beziehungsweise des Betrachtenden ermitteln. Die Topographie kann beispielsweise durch Geländeformationen und/oder dergleichen gebildet sein. Objekte können beispielsweise andere Verkehrsteilnehmer, Hindernisse im Sichtfeld des Fahrers, aber auch Gebäude sowie andere Bauwerke und/oder dergleichen sein. Vorzugsweise werden die Objektdaten und/oder die Topographiedaten regelmäßig neu erfasst, insbesondere in Abhängigkeit einer jeweils sich ändernden Position des Kraftfahrzeuges aufgrund des bestimmungsgemäßen Fahrbetriebes.

Objekte können beispielsweise Referenzpunkte sein, die in Weltkoordinaten oder dergleichen bestimmt sein können. Die Lichtverteilung kann an diese Objekte angepasst werden. So kann basierend auf diesen Daten zum Beispiel ein entgegenkommendes Fahrzeug und/oder ein vorrausfahrendes Fahrzeug ausgeblendet und/oder auch eine Fahrspur eingeblendet werden. Darüber hinaus kann eine Projektionsdarstellung auch an eine Entfernung an ein vorrausfahrendes Fahrzeug angepasst werden. Weiterhin besteht die Möglichkeit, die Lichtverteilung zum Beispiel aufgrund von Fahrzeugdaten anzupassen, die beispielsweise Parameter wie Lenkwinkel, Geschwindigkeit, Fahrtrichtung und/oder dergleichen umfassen können.

Vorzugsweise kann für eine korrekte Verzerrungskompensation die Topographie der Projektionsfläche berücksichtigt werden, beispielsweise einer Fahrbahn des Fahrwegs, einem im Sichtbereich befindlichen Gelände und/oder dergleichen. Die Projektionsfläche kann dem Grunde nach neben der Straße auch eine andere Projektionsfläche, beispielsweise eine Wand oder dergleichen sein. Soll zum Beispiel eine Lichtverteilung von einem linken und einem rechten Scheinwerfer des Kraftfahrzeuges überlagert dargestellt werden, so kann die Beschaffenheit der Topographie auch in der Berechnung zu berücksichtigen sein, um eine korrekte Überlagerung der Projektionen durch die jeweiligen Scheinwerfer erreichen zu können.

Besonders vorteilhaft wird darüber hinaus eine Kopfposition des Betrachters, hier des Fahrers, einbezogen. Weiterhin besteht die Möglichkeit, eine Verkippung der Projektionsebene zu berücksichtigen, zum Beispiel wenn das Fahrzeug eigene Bewegung des bestimmungsgemäßen Fahrbetriebs ausführt, beispielsweise aufgrund von Wank- und/oder Nickbewegungen, welche durch eine Fahrzeugdynamik und/oder eine Straßentopographie hervorgerufen sein können. Auch dies kann für die Verfahrensführung hinzugezogen werden. Mit diesen Daten kann erreicht werden, dass die gewünschte Lichtverteilung vorzugsweise im Wesentlichen immer im gleichen horizontalen und vertikalen Abstand projetziert werden kann.

Dabei erweist es sich als vorteilhaft, dass die Berechnung sowohl für die Darstellung mittels Scheinwerfer als auch für die Darstellung mittels HUD genutzt werden kann. Eine Umschaltung kann einfach dadurch realisiert werden, dass ein entsprechender Anpassungsfaktor in Betracht gezogen wird, der die unterschiedlich physikalischen Aspekte des Scheinwerfers in Bezug auf ein HUD berücksichtigt. Insofern kann durch die erfindungsgemäße Verfahrensführung eine Bereitstellung eines Steuersignals für die Projektionseinrichtung erreicht werden, die im Wesentlichen unabhängig von der jeweiligen Projektionseinrichtung sein kann. Dadurch wird ein neues Feld für Anwendungen der Fahrerunterstützung eröffnet.

In einem nächsten Schritt, dargestellt mit einem Block 16, wird die Sichtbarkeit insbesondere für den Fahrer überprüft. Für die Bewertung der Sichtbarkeit einer jeweiligen Lichtverteilung können mehrere Parameter berücksichtigt werden. So kann die Struktur der Projektionsfläche berücksichtigt werden, die zum Beispiel von einem Reflexionsgrad und weiteren Reflexionseigenschaften der Projektionsfläche abhängen können. Ein weiterer Parameter kann die Information sein, ob die Projektionsfläche nass, mit Schnee oder mit Eis bedeckt ist. Je nach Oberflächenbeschaffenheit kann eine entsprechend abgegebene Lichtstärke eingestellt werden. So kann auch erreicht werden, dass zum Beispiel aufgrund der Oberflächenbeschaffenheit eine jeweilige Lichtfunktion nicht mehr dargestellt werden kann. Dies kann beispielsweise dann auftreten, wenn eine Umgebung zu hell ist und eine Intensität der Lichtverteilung nicht weiter gesteigert werden kann. Darüber hinaus kann auch eine Verkehrsdichte berücksichtigt werden. Ist die Verkehrsdichte beispielsweise zu hoch und ein Abstand zu anderen Kraftfahrzeugen dauerhaft zu gering, kann ebenfalls vorgesehen sein, die Lichtfunktion nicht mehr aktivieren zu können beziehungsweise eine entsprechende Lichtverteilung nicht mehr darzustellen.

In einem weiteren Schritt, dargestellt mit einem Block 18, erfolgt die Ausgabe. In diesem Schritt wird die Lichtverteilung von der Projektionseinrichtung ausgegeben. Darüber hinaus kann hier vorgesehen sein, dass die Ausgabe angepasst an eine jeweilige Projektionseinrichtung erfolgt, die fahrerseitig und/oder seitens der übergeordneten Kraftfahrzeugsteuerung ausgewählt wurde. Entsprechend kann hier die jeweilige Projektionseinrichtung eine Anpassung vorgesehen sein.

Die Verfahrensführung gemäß der Erfindung ist vorzugsweise für eine permanente Wiederholung vorgesehen. Dies kann insbesondere berücksichtigen, dass das Kraftfahrzeug während der Nutzung der Erfindung in einem bestimmten Fahrbetrieb ist und sich die entsprechenden Daten abhängig von einer jeweiligen Fahrposition des Kraftfahrzeuges ändern. Dadurch ist es möglich, eine fortgesetzte Verfahrensführung zu erreichen, die aufgrund er erfindungsgemäßen Eigenschaften eine verbesserte Unterstützung des Fahrers beim Führen des Kraftfahrzeuges ermöglicht.

Die Erfindung nutzt ferner insbesondere den Gedanken, dass durch die gemeinsame Berechnung in einem Steuergerät wie der Vorrichtung gemäß der Erfindung es möglich ist, eine Funktion interaktiv zwischen unterschiedlichen Projektionseinrichtungen wie dem HUD und dem Scheinwerfer darzustellen. Beispielsweise kann eine Abbiegeempfehlung sowohl im HUD als auch mittels des Scheinwerfers dargestellt werden. Darüber hinaus ist es möglich, dass eine Funktion vom HUD zum Scheinwerfer und umgekehrt übergeben wird, beispielsweise wenn ein Öffnungswinkel vom HUD ausgeschöpft ist und eine erweiterte Darstellung mittels des Scheinwerfers realisiert werden kann.

Vorzugsweise ist eine Architektur des HUD und des Scheinwerfers entsprechend angepasst ausgebildet.

Auch wenn die Erfindung anhand der Anwendung bei dem Fahrer erläutert worden ist, sollte für den Fachmann klar sein, dass die Projektionseinrichtung natürlich auch für einen anderen und/oder weiteren Mitfahrer im Kraftfahrzeug eingestellt und gesteuert werden kann. Das Verfahren der Erfindung braucht somit nicht auf den Fahrer als Führer des Kraftfahrzeugs beschränkt zu sein. Der Fahrer kann somit auch ein Mitfahrer beziehungsweise irgendein Fahrzeuginsasse sein. Zu diesem Zweck kann eine geeignete Auswahlfunktion vorgesehen sein, die durch den Fahrer und/oder den Mitfahrer sowie gegebenenfalls auch durch die Fahrzeugsteuerung betätigt werden kann.

## Patentansprüche

1. Verfahren zum Bereitstellen einer Lichtfunktion zum Unterstützen eines Fahrers beim Führen eines Kraftfahrzeugs, bei dem
- die Lichtfunktion aktiviert (10) wird,
- eine Lichtverteilung gemäß der Lichtfunktion ermittelt wird, wobei die Lichtverteilung neben Zeichen, insbesondere Symbolen, auch eine visuelle Hervorhebung von bestimmten Bereichen eines Sichtfelds und/oder dergleichen umfasst,
- eine Perspektive eines Fahrers des Kraftfahrzeugs ermittelt (12) wird, und
- eine Projektionseinrichtung des Kraftfahrzeugs derart gesteuert (18) wird, dass die Projektionseinrichtung Licht gemäß der Lichtverteilung abgibt,
wobei
- die Projektionseinrichtung das Licht als Projektion beziehungsweise Darstellung mittels wenigstens einer Head-Up-Anzeigeeinrichtung und wenigstens einem Pixelscheinwerfer abgibt, wobei sowohl die Head-Up-Anzeigeeinrichtung als auch der Pixelscheinwerfer entsprechend ausgebildet sind, um die in der Lichtfunktion entsprechende Lichtverteilung in geeigneter Weise für den Fahrer visuell erfassbar darzustellen,
- Topographiedaten von einer Umgebung in einem Sichtfeld des Fahrers und/oder Objektdaten von einem Objekt in der Umgebung im Sichtfeld des Fahrers ermittelt werden und
- die Lichtverteilung abhängig von den Topographie- und/oder Objektdaten und der Perspektive ermittelt (14) wird,
- die Head-Up-Anzeigeeinrichtung derart gesteuert wird, dass die Lichtverteilung durch die Head-Up-Anzeigeeinrichtung bereitgestellt wird, wobei eine Lichtverteilung, die über einen Darstellungsbereich der Head-Up-Anzeigeeinrichtung hinausragt, zumindest teilweise durch wenigstens einen der Pixelscheinwerfer dargestellt wird.

2. Verfahren nach Anspruch 1,
**dadurch gekennzeichnet, dass**
die Lichtverteilung abhängig von Sichtverhältnissen ermittelt (16) wird.

3. Verfahren nach einem der vorhergehenden Ansprüche,
**dadurch gekennzeichnet, dass**
die Projektionseinrichtung derart gesteuert wird, dass die Lichtverteilung unabhängig von einer Orientierung des Kraftfahrzeugs in Bezug auf eine Oberfläche eines Verkehrswegs, auf dem das Kraftfahrzeug geführt wird, bereitgestellt wird.

4. Verfahren nach einem der vorhergehenden Ansprüche,
**dadurch gekennzeichnet, dass**
die Perspektive vom Fahrer und/oder abhängig von Fahrzeugdaten des Kraftfahrzeugs automatisiert angepasst wird.

5. Verfahren nach einem der vorhergehenden Ansprüche,
**dadurch gekennzeichnet, dass**
die Projektionseinrichtung wenigstens zwei Pixelscheinwerfer umfasst und die Pixelscheinwerfer derart gesteuert werden, dass die Lichtverteilung durch eine Überlagerung der Lichtabgabe durch die Scheinwerfer bereitgestellt wird.

6. Vorrichtung zum Bereitstellen einer Lichtfunktion zum Unterstützen eines Fahrers beim Führen eines Kraftfahrzeugs, wobei die Vorrichtung aufweist:
- Mittel (10) zum Aktivieren der Lichtfunktion aufgrund eines Empfangs eines der Lichtfunktion zugeordneten Aktivierungssignals,
- Mittel zum Ermitteln einer Lichtverteilung gemäß der Lichtfunktion, wobei die Lichtverteilung neben Zeichen, insbesondere Symbolen, auch eine visuelle Hervorhebung von bestimmten Bereichen eines Sichtfelds und/oder dergleichen umfasst,
- Mittel (12) zum Ermitteln einer Perspektive eines Fahrers des Kraftfahrzeugs, und
- eine Steuereinheit (18) zum Bereitstellen eines Steuersignals zum Steuern einer Projektionseinrichtung des Kraftfahrzeugs, sodass die Projektionseinrichtung Licht gemäß der Lichtverteilung abgibt,
- wobei die Projektionseinrichtung ausgebildet ist, das Licht als Projektion beziehungsweise Darstellung mittels wenigstens einer Head-Up-Anzeigeeinrichtung und wenigstens einem Pixelscheinwerfer abzugeben, wobei sowohl die Head-Up-Anzeigeeinrichtung als auch der Pixelscheinwerfer entsprechend ausgebildet sind, um die in der Lichtfunktion entsprechende Lichtverteilung in geeigneter Weise für den Fahrer visuell erfassbar darzustellen,
- wobei die Head-Up-Anzeigeeinrichtung derart gesteuert wird, um die Lichtverteilung durch die Head-Up-Anzeigeeinrichtung bereitzustellen, wobei eine Lichtverteilung, die über einen Darstellungsbereich der Head-Up-Anzeigeeinrichtung hinausragt, zumindest teilweise durch wenigstens einen der Pixelscheinwerfer dargestellt wird, die Vorrichtung ferner aufweist:
- Mittel (14) zum Ermitteln von Topographiedaten von einer Umgebung in einem Sichtfeld des Fahrers und/oder von Objektdaten von einem Objekt in der Umgebung im Sichtfeld des Fahrers und
- wobei die Mittel zum Ermitteln der Lichtverteilung ausgebildet sind, die Lichtverteilung abhängig von den Topographie- und/oder Objektdaten und der Perspektive zu ermitteln.

7. Kraftfahrzeug mit einer Vorrichtung nach Anspruch 6.

## Claims

1. Method for providing a light function for supporting a driver when driving a motor vehicle, in which
- the light function (10) is activated,
- a light distribution is determined according to the light function, wherein a light distribution also comprises in addition to signs, in particular symbols, a visual highlighting of specific areas of a field of vision and/or the like,
- a perspective of a driver of the motor vehicle (12) is determined and
- a projection system of the motor vehicle is controlled (18) such that the projection system emits lights according to the light distribution,
wherein
- the projection system emits the light as a projection or representation by means of at least one head-up display device and at least one pixel headlight, wherein both the head-up display device and also the pixel headlight are designed accordingly, in order to visually represent the light distribution according to the light function in a suitable manner for the driver,
- topography data from an environment are determined in a field of vision of the driver and/or object data of an object in the environment in the field of vision of the driver and
- the light distribution is determined depending on the topography and/or object data and the perspective (14),
- the head-up display device is controlled such that the light distribution is provided by the head-up display device, wherein a light distribution which projects over a display area of the head-up display device, is represented at least partly by at least one of the pixel headlights.

2. Method according to claim 1,
**characterised in that**
the light distribution is dependent on visibility conditions (16).

3. Method according to any of the preceding claims,
**characterised in that**
the projection system is controlled such that the light distribution is provided independently of an orientation of the motor vehicle relative to a surface of a traffic route on which the motor vehicle is being driven.

4. Method according to any of the preceding claims,
**characterised in that**
the perspective is adjusted automatically by the driver and/or depending on vehicle data of the motor vehicle.

5. Method according to any of the preceding claims,
**characterised in that**
the projection system comprises at least two pixel headlights and the pixel headlights are controlled such that the light distribution is provided by overlaying the light output with the headlights.

6. Device for providing a light function for supporting a driver when driving a motor vehicle, wherein the device has:
- means (10) for activating the light function on the basis of receiving an activation signal assigned to the light function,
- means for determining a light distribution according to the light function, wherein the light distribution also comprises in addition to signs, in particular symbols, a visual highlighting of specific areas of a field of vision and/or the like,
- means (12) for determining a perspective of a driver of the motor vehicle, and
- a control unit (18) for providing a control signal for controlling a projection system of the motor vehicle, so that the projection system emits light according to the light distribution,
- wherein the projection system is designed to emit the light as a projection or representation by means of at least one head-up display device and at least one pixel headlight, wherein both the head-up display device and also the pixel headlight are designed accordingly in order to visually represent the corresponding light distribution in the light function in a suitable manner for the driver,
- wherein the head-up display device is controlled in order to provide the light distribution by means of the head-up display device,
wherein a light distribution which projects over a representation area of the head-up display device, is represented at least partly by at least one of the pixel headlights, the device also has:
- means (14) for determining topography data of an environment in a field of vision of the driver and/or of object data of an object in the environment in the field of vision of the driver and
- wherein the means are designed to determine the light distribution, to determine the light distribution as a function of the topography and/or object data and the perspective.

7. Motor vehicle having a device according to claim 6.

## Revendications

1. Procédé pour fournir une fonction d'éclairage pour assister un conducteur lors de la conduite d'un véhicule à moteur, dans lequel
- la fonction d'éclairage est activée (10),
- une répartition de lumière est déterminée en fonction de la fonction d'éclairage, dans lequel la répartition de lumière comprend non seulement des signes, notamment des symboles, mais également une mise en évidence visuelle de zones spécifiques d'un champ de vision et/ou similaires,
- une perspective d'un conducteur du véhicule à moteur est déterminée (12), et
- un dispositif de projection du véhicule à moteur est commandé (18) de telle manière que le dispositif de projection émet de la lumière en fonction de la répartition de lumière, dans lequel
- le dispositif de projection émet la lumière sous forme d'une projection et/ou d'une représentation au moyen d'au moins un dispositif d'affichage tête haute et d'au moins un projecteur à pixels, dans lequel le dispositif d'affichage tête haute et le projecteur à pixels sont conçus de manière correspondante pour représenter la répartition de lumière correspondante dans la fonction d'éclairage d'une manière appropriée pour que le conducteur puisse la voir visuellement,
- des données de topographie d'un environnement dans un champ de vision du conducteur et/ou des données d'objet d'un objet dans l'environnement dans le champ de vision du conducteur sont déterminées, et
- la répartition de lumière est déterminée (14) en fonction des données de topographie et/ou des données d'objet et de la perspective,
- le dispositif d'affichage tête haute est commandé de manière à ce que la répartition de lumière soit assurée par le dispositif d'affichage tête haute, dans lequel une répartition de lumière qui fait saillie au-delà d'une zone de représentation du dispositif d'affichage tête haute est représentée au moins partiellement par au moins l'un des projecteurs à pixels.

2. Procédé selon la revendication 1, **caractérisé en ce que** la répartition de lumière est déterminée en fonction de la visibilité (16).

3. Procédé selon l'une quelconque des revendications précédentes, **caractérisé en ce que** le dispositif de projection est commandé de telle sorte que la répartition de lumière est fournie quelle que soit l'orientation du véhicule à moteur par rapport à une surface d'une voie de circulation sur laquelle le véhicule à moteur est guidé.

4. Procédé selon l'une quelconque des revendications précédentes, **caractérisé en ce que** la perspective est automatiquement adaptée par le conducteur et/ou en fonction des données du véhicule à moteur.

5. Procédé selon l'une quelconque des revendications précédentes, **caractérisé en ce que** le dispositif de projection comprend au moins deux projecteurs à pixels et les projecteurs à pixels sont commandés de telle sorte que la répartition de lumière est assurée par une superposition de la lumière émise par les projecteurs.

6. Appareil pour fournir une fonction d'éclairage pour assister un conducteur lors de la conduite d'un véhicule à moteur, l'appareil comprenant :
- un moyen (10) pour activer la fonction d'éclairage sur la base d'une réception d'un signal d'activation associé à la fonction d'éclairage,
- un moyen pour déterminer une répartition de lumière en fonction de la fonction d'éclairage, dans lequel la répartition de lumière comprend non seulement des signes, notamment des symboles, mais également une mise en évidence visuelle de zones spécifiques d'un champ de vision et/ou similaires,
- des moyens (12) pour déterminer une perspective d'un conducteur du véhicule à moteur, et
- une unité de commande (18) pour fournir un signal de commande pour commander un dispositif de projection du véhicule à moteur, de sorte que le dispositif de projection émet de la lumière en fonction de la répartition de lumière,
- dans lequel le dispositif de projection est conçu de sorte que de la lumière est émise sous forme d'une projection et/ou d'une représentation au moyen d'au moins un dispositif d'affichage tête haute et d'au moins un projecteur à pixels, dans lequel le dispositif d'affichage tête haute et le projecteur à pixels sont conçus de manière correspondante pour représenter la répartition de lumière correspondante dans la fonction d'éclairage d'une manière appropriée pour que le conducteur puisse la voir visuellement,
- dans lequel le dispositif d'affichage tête haute est commandé de manière à fournir la répartition de lumière à travers le dispositif d'affichage tête haute,
- dans lequel une distribution de lumière, qui fait saillie au-delà d'une zone de représentation du dispositif d'affichage tête haute, est au moins partiellement représentée par au moins l'un des projecteurs à pixels, le dispositif comprenant en outre :
- des moyens (14) pour déterminer des données de topographie d'un environnement dans un champ de vision du conducteur et/ou des données d'objet d'un objet dans l'environnement dans le champ de vision du conducteur et
- dans lequel les moyens pour déterminer la répartition de lumière sont conçus pour déterminer la répartition de lumière en fonction de données de topographie et/ou de données objet et de la perspective.

7. Véhicule à moteur avec un appareil selon la revendication 6.
